# FASCICULE DE BREVET EUROPEEN

(11) **EP 3 639 177 B1**
(45) Date de publication et mention de la délivrance du brevet: **27.03.2024**
(21) Numéro de dépôt: 18729719.7
(22) Date de dépôt: 15.06.2018
(51) Int. Cl.: G06F 21/31, G06F 21/36

(54) **PROCÉDÉ ET DISPOSITIF DE VALIDATION DE CODE D'AUTHENTIFICATION**
VERFAHREN UND GERÄT ZUR BESTÄTIGUNG EINES AUTHENTIFIZIERUNGSKODE.
METHOD AND APPARATUS FOR VALIDATION OF AUTHENTICATION CODE

(30) Priorité: 16.06.2017 FR 1755513
(43) Date de publication de la demande: 22.04.2020
(73) Titulaire: Viaccess, 92057 Paris La Defense Cedex (FR)
(72) Inventeur: FLAMMANG, Hadrien, 75020 Paris (FR)
(74) Mandataire: Lavoix
(86) Numéro de dépôt international: PCT/EP2018/066000
(87) Numéro de publication internationale: WO 2018/229269

(56) Documents cités:
- WO-A1-2014/169668
- FR-A1- 2 834 157
- US-A1- 2013 212 674

## Description

La présente invention concerne un procédé de validation de code d'authentification permettant à un utilisateur autorisé à accéder à un service ou système informatique. Elle concerne un dispositif, un système et un programme d'ordinateur associés.

L'invention se situe dans le domaine de l'authentification sécurisée d'utilisateurs pour l'accès à des services ou systèmes informatiques.

De manière classique, pour se connecter à un service ou système informatique, par exemple à un serveur, distant ou non, un utilisateur utilise un terminal pour saisir un identifiant permettant de l'identifier de manière unique dans le système informatique, et un code d'authentification, en général secret et personnel, associé à l'identifiant d'utilisateur. Permettant d'authentifier l'utilisateur, le code d'authentification ne doit être connu que de celui-ci et du système. De manière classique, le code d'authentification est une séquence de symboles chacun choisi dans un ensemble de symboles de référence, couramment appelée « mot de passe », à saisir par l'intermédiaire d'une interface homme-machine.

En général, le mot de passe est composé de caractères alphanumériques et saisi par un utilisateur sur un clavier, ou par l'intermédiaire d'un dispositif de pointage, tel qu'une souris, un stylet ou un doigt de l'utilisateur, sur un pavé alphanumérique affiché sur un écran. Or, il existe des logiciels malveillants (« malware » en anglais), tel les enregistreurs de frappe, ou « keyloggers » en anglais, qui, installés sur le terminal de l'utilisateur, sont capables d'enregistrer les touches appuyées sur le clavier, ou le signal de sortie de toute autre interface homme-machine utilisée, telle qu'une souris, et de restituer en conséquence le code d'authentification saisi par l'utilisateur.

Il est donc nécessaire d'augmenter la sécurité d'accès à des services ou systèmes.

Afin d'augmenter la sécurité, il a été proposé d'afficher un pavé alphanumérique virtuel à l'écran, sur les touches duquel les symboles sont distribués aléatoirement, leur distribution étant mise à jour dynamiquement, et de proposer à l'utilisateur de saisir le code d'authentification par sélection, successivement, des symboles de la séquence de caractères constituant le code d'authentification sur ce pavé alphanumérique virtuel. Par exemple l'utilisateur se sert d'un dispositif de pointage tel une souris, et la sélection d'un symbole se fait par clic sur son image.

De tels systèmes sont par exemple utilisés pour accéder aux services bancaires. Bien que la sécurité soit augmentée, des logiciels malveillants peuvent néanmoins récupérer des successions de captures d'écran du terminal utilisateur et analyser automatiquement le placement de la souris par l'intermédiaire de l'identifiant de pointeur affiché sur l'écran lorsque la souris se déplace. Il est alors à nouveau possible d'identifier automatiquement les caractères alphanumériques saisis, et de reconstituer la séquence de caractères formant le code d'authentification.

Les documents FR 2 834 157 A1, WO2014/1696688 A1 et US2013/021674 A1 décrivent des procédés de validation de code d'authentification.

Il est connu d'augmenter la sécurité en créant des codes d'authentification à partir de données biométriques, mais l'authentification biométrique nécessite l'utilisation de terminaux équipés de périphériques spécialisés.

L'invention a pour but de remédier aux inconvénients de l'état de la technique.

A cet effet, l'invention propose un procédé de validation de code d'authentification permettant à un utilisateur autorisé à accéder à un service ou un système informatique selon la revendication 1.

Avantageusement, l'invention permet d'améliorer la sécurité de l'authentification sans nécessiter de périphérique spécialisé.

Le procédé de validation de code d'authentification selon l'invention peut présenter une ou plusieurs des caractéristiques des revendications dépendantes 2 à 12, prises indépendamment ou selon toutes les caractéristiques techniquement acceptables.

Selon un autre aspect, l'invention propose un dispositif de validation de code d'authentification permettant à un utilisateur autorisé à accéder à un service ou un système informatique selon la revendication 14.

Selon un autre aspect, l'invention propose un système de validation de code d'authentification permettant à un utilisateur autorisé à accéder à un service ou un système informatique selon la revendication 15.

Avantageusement, dans un mode de réalisation, les modules de superposition sur l'image de fond d'éléments graphiques à des positions déterminées aléatoirement, de mémorisation, pour chaque élément graphique, d'au moins une information relative au symbole représenté et à la position de l'élément graphique, et de détermination d'une séquence de symboles parcourus à partir de ladite succession de coordonnées spatiales sont mis en oeuvre par le serveur. Par conséquent, la sécurité est augmentée, car il est plus difficile d'attaquer informatiquement un serveur qu'un terminal d'utilisateur.

Selon un autre aspect, l'invention propose un programme d'ordinateur comportant des instructions pour mettre en oeuvre les étapes d'un procédé de validation de code d'authentification tel que brièvement décrit ci-dessus lors de l'exécution du programme par un processeur d'un dispositif programmable.

D'autres caractéristiques et avantages de l'invention ressortiront de la description qui en est donnée ci-dessous, à titre indicatif et nullement limitatif, en référence aux figures annexées, parmi lesquelles :
- la figure 1 représente schématiquement un système mettant en oeuvre un procédé de validation de code d'authentification selon un mode de réalisation de l'invention;
- la figure 2 est un synoptique des principales étapes mises en oeuvre par un procédé de validation de code d'authentification dans un mode de réalisation ;
- les figures 3 et 4 illustrent des exemples d'images de saisie de code d'authentification selon des modes de réalisation ;
- la figure 5 est un synoptique des principales étapes mises en oeuvre pour déterminer le code d'authentification selon un premier mode de réalisation ;
- la figure 6 est un synoptique des principales étapes mises en oeuvre pour déterminer le code d'authentification selon un deuxième mode de réalisation.

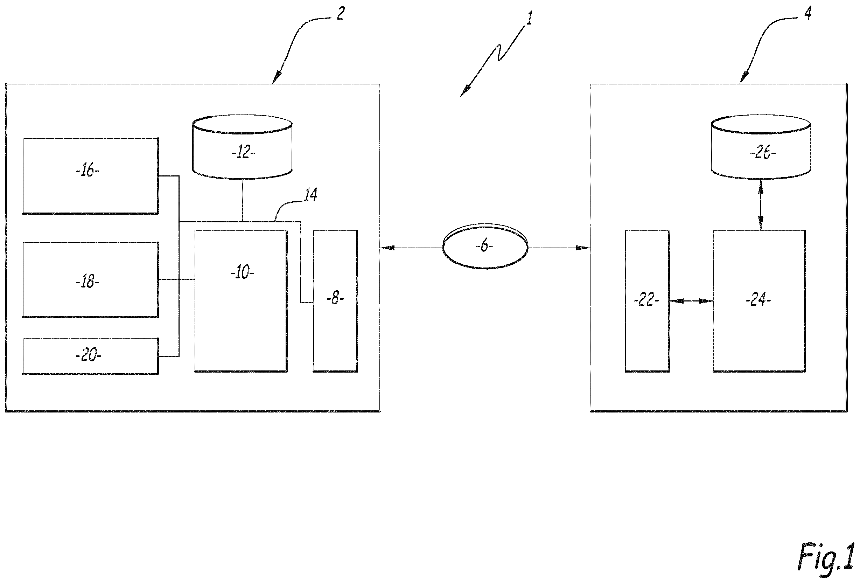

La figure 1 illustre schématiquement un mode de réalisation d'un système de validation de code d'authentification selon l'invention.

Le système 1 comporte un terminal d'utilisateur 2, appelé par la suite simplement terminal, adapté à se connecter à un service par l'intermédiaire d'un serveur 4, via un réseau de communications 6, par exemple Internet. Dans l'exemple de la figure 1 le serveur 4 est un serveur distant. Dans une variante non représentée, le serveur est local, le terminal 2 étant connecté au serveur 4 par une liaison directe, filaire ou non.

Le terminal 2 est par exemple un dispositif programmable, par exemple un ordinateur ou une tablette, comprenant une unité 8 de communication avec le réseau de communication 6, apte à envoyer et à recevoir des données selon un protocole de communication adapté, par exemple le protocole IP (pour « Internet Protocol »).

Ce terminal 2 comporte également une unité centrale de calcul 10, comportant un ou plusieurs processeurs, apte à exécuter des programmes informatiques lorsque le terminal 2 est mis sous tension. L'unité centrale de calcul 10 exécute des modules logiciels comportant des instructions de code exécutable aptes à mettre en oeuvre le procédé selon l'invention.

Le terminal 2 comporte également une unité de stockage d'informations 12, par exemple des registres, apte à stocker des données et des instructions de code exécutable permettant l'exécution de programmes comportant des instructions de code aptes à mettre en oeuvre le procédé selon l'invention. Les divers blocs fonctionnels du terminal 2 décrits ci-dessus sont connectés via un bus de communication 14.

Le terminal 2 comprend ou est connecté à un écran d'affichage 16. Selon un mode de réalisation, le terminal comprend un moyen 18 d'interaction avec l'utilisateur qui coopère avec un dispositif de pointage 20, par exemple une souris, un stylet ou tout autre dispositif de pointage, qui permet de désigner un point de l'écran, dit point d'application et matérialisé sur l'écran par un pointeur. Un pointeur a par exemple la forme d'un curseur d'édition, d'une flèche, d'un sablier ou d'une main.

En variante l'écran d'affichage 16 est de type tactile et forme également un moyen d'interaction 18 avec un utilisateur. Dans cette variante, un doigt de l'utilisateur peut être utilise comme dispositif de pointage.

Dans tous les modes de réalisation, le dispositif de pointage 20, souris, stylet ou doigt de l'utilisateur, en coopération avec le moyen d'interaction 18, permet à l'utilisateur d'effectuer des tracés sur l'écran d'affichage, des positions successives du point d'application étant mémorisées.

Le serveur distant 4 comporte une unité 22 de communication avec le réseau de communication 6, apte à envoyer et à recevoir des données selon un protocole de communication adapté, par exemple le protocole IP (pour « Internet Protocol »).

Le serveur 4 est également un dispositif programmable et comporte en outre une unité centrale de calcul 24, comportant un ou plusieurs processeurs, apte à exécuter des programmes informatiques lorsque le serveur 4 est mis sous tension, et une unité de stockage d'informations 26, par exemple des registres, apte à stocker des données et des instructions de code exécutable permettant l'exécution de programmes comportant des instructions de code aptes à mettre en oeuvre le procédé selon l'invention.

L'environnement d'exécution d'instructions de code par le serveur 4 est considéré comme étant un environnement sécurisé, alors que l'environnement d'exécution d'instructions de code par le terminal 2 est considéré comme un environnement d'exécution standard, non sécurisé. Un environnement est dit sécurisé si l'utilisateur ne peut pas accéder à son contenu. Il peut s'agir d'un serveur web, d'un TE (« trusted environnement » sur un terminal) ou d'un chipset sécurisé.

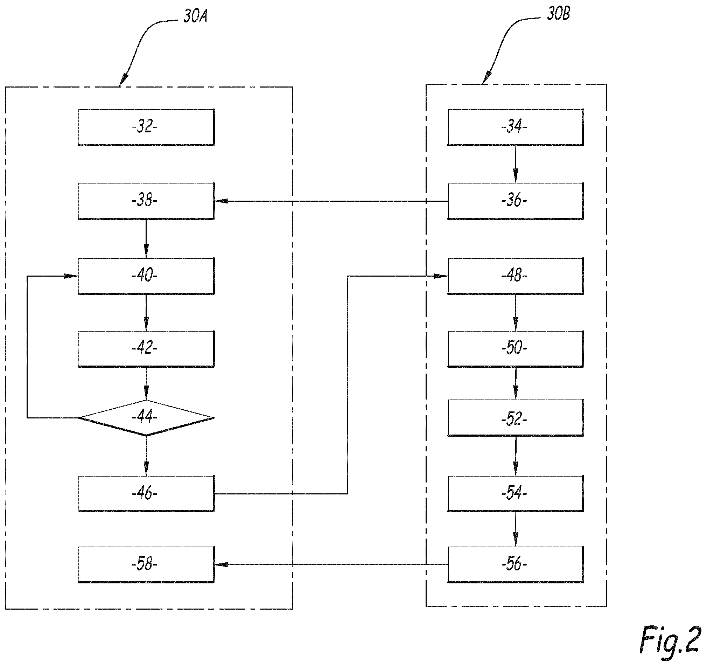

La figure 2 est un organigramme des principales étapes d'un procédé de validation de code d'authentification selon un mode de réalisation de l'invention, mises en oeuvre par le ou les processeurs de calcul 10 du terminal d'une part, et par le ou les processeurs de calcul 24 du serveur d'autre part.

Ainsi, on distingue un premier ensemble 30A d'étapes mises en oeuvre sur le terminal 2, et un deuxième ensemble 30B d'étapes mises en oeuvre par le serveur 4.

Lors d'une première étape 32, le terminal soumet au serveur 4 une requête d'accès au service acquise suite à une action de l'utilisateur du terminal, telle par exemple que la demande d'affichage de la page d'accueil du service.

Suite à la réception de la requête, le serveur met en oeuvre une étape 34 de génération d'une image numérique I de saisie de code d'authentification, appelée pour simplifier image de saisie.

L'image de saisie peut également permettre la saisie simple, c'est-à-dire non sécurisée, d'un identifiant public de l'utilisateur, ou être générée suite à une étape préalable de saisie de cet identifiant.

En variante, l'étape 34 de génération d'une image numérique de saisie de code d'authentification est effectuée préalablement à la réception d'une requête de la part d'un terminal utilisateur. Dans ce cas, à la réception d'une requête du terminal, une image numérique de saisie de code d'authentification est obtenue à partir d'une mémoire du serveur.

L'image de saisie est composée d'une image de fond, de préférence texturée, sur laquelle sont positionnés des éléments graphiques représentatifs des symboles sélectionnables pour former un code d'authentification.

La notion de texture est issue du domaine textile où elle désigne les « disposition et mode d'entrecroisement des fils dans un tissage », ou l'« état de ce qui est tissé ». Elle est étendue à nombre de domaines où elle désigne par analogie la qualité physique d'un objet (un tissu organique, un aliment, un métal, un sol, une roche, etc.) en lien avec la dimension, la forme, la disposition et l'entrelacement de ses composants (les fibres, ingrédients, grains, constituants, minéraux, etc.).

Dans une image, une texture désigne plus particulièrement un arrangement spatial de couleurs ou d'intensités dans une région de cette image.

On utilise le terme « image texturée » pour une image comportant des tels arrangements spatiaux sur toute sa surface, par opposition à une image comportant de larges régions uniformes ou lisses.

L'image de fond est une image numérique de L lignes et C colonnes de pixels définissant sa taille.

L'image de fond peut être générée dynamiquement, à la volée, lors de l'étape 34, par exemple par sélection d'un motif et d'une couleur associée. En variante, des formes géométriques variées (droites à orientation aléatoire dans le plan, cercles, ellipses, rectangles) sont disposées aléatoirement pour former une image de fond fortement contrastée.

La notion de contraste à laquelle on s'intéresse ici, est celle de contraste local. De nombreuses définitions en sont connues, qui permettent de calculer le contraste local comme variation locale, absolue ou relative, de la luminance ou de l'intensité lumineuse. L'oeil humain ne distingue une telle variation relative d'intensité lumineuse, qu'à partir d'un seuil d'approximativement 0,05 à 0,10, en valeur absolue, selon les individus.

Un contraste est par exemple dit élevé si la variation relative d'intensité est supérieure à 1, 5, ou 10.

Selon une autre variante, l'image de fond est une image naturelle texturée ou comportant de nombreux détails fortement contrastés, qui est lue dans une mémoire 26 du dispositif.

Bien entendu, il existe de nombreuses autres méthodes, à la portée d'un homme du métier, pour générer une image de fond texturée et/ou comportant des détails fortement contrastés.

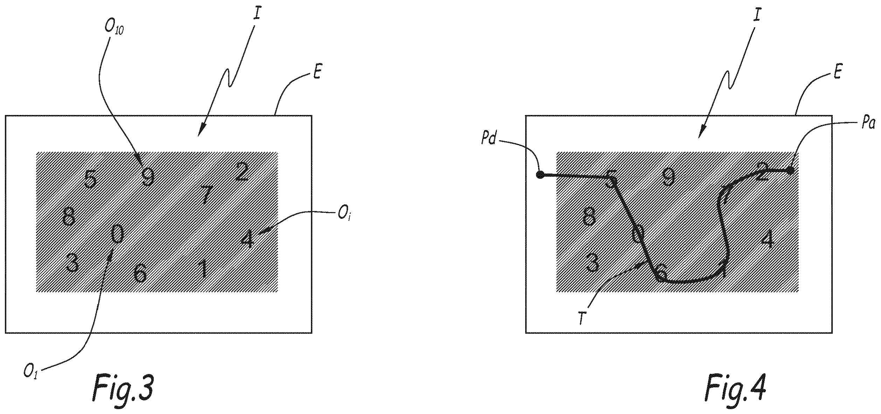

Les figures 3 et 4 illustrent schématiquement une image de saisie comportant une image de fond formée par un motif géométrique.

Sur l'image de fond sont positionnés, pseudo-aléatoirement, N éléments graphiques représentant les éléments d'un ou de sous-ensemble(s) du ou des ensemble(s) de symboles de référence, par exemple 10 éléments graphiques O₁ à O₁₀ comportant chacun le tracé d'un chiffre respectif compris entre 0 et 9 lorsque le code d'authentification est une séquence d'un nombre prédéterminé de chiffres, par exemple de quatre, six ou huit chiffres.

De manière plus générale, des éléments graphiques représentant d'autres symboles alphanumériques, par exemple des lettres, sont superposés à l'image de fond pour former l'image numérique de saisie de code d'authentification.

Plus généralement encore, les éléments graphiques positionnés sur l'image de fond sont les tracés de l'ensemble des symboles utilisables pour former un code d'authentification.

Dans un mode de réalisation alternatif, les éléments graphiques comportent chacun le tracé d'un objet codant un symbole. Par exemple, chaque élément graphique est une image d'un objet ou d'un animal facilement identifiable par un utilisateur, et la première lettre du mot désignant l'objet affiché est le symbole codé. Ainsi, par exemple, une image de banane code la lettre B, une image d'éléphant code la lettre E, une image d'orange code la lettre O, une image de train code la lettre T, une image de zèbre code la lettre Z. Bien évidemment, de nombreuses variantes de codage d'un symbole par une image sont envisageables.

Les éléments graphiques O₁ à O₁₀ sont positionnés de manière pseudo-aléatoire. La taille des éléments graphiques, et l'espacement entre deux éléments graphiques voisins spatialement sont choisis de manière à ce qu'une distance minimale Dₘᵢₙ soit garantie entre deux éléments graphiques voisins.

Par exemple, à chaque élément graphique affiché est associé un cercle dans lequel il est inscrit, au moins partiellement.

L'élément graphique et son cercle associé sont typiquement concentriques. Le centre du cercle détermine la position de l'élément graphique. La distance d'un point à ce centre détermine sa distance à l'élément graphique.

Le cercle associé à un élément graphique n'est pas représenté sur la figure, mais seulement utilisé par l'algorithme de détermination du code d'authentification saisi pour déterminer si l'élément graphique est ou non parcouru par la trajectoire. Un point est en effet considéré comme appartenant à l'élément graphique si sa distance au centre du cercle associé est inférieure à une valeur prédéterminée égale au rayon du cercle associé à l'élément graphique, c'est-à-dire si le point est situé à l'intérieur de ce cercle. L'association à un élément graphique, d'un cercle dans lequel il est partiellement inscrit a ainsi pour avantage de permettre de ne prendre en compte que les parcours « francs » de l'élément graphique, traversant un voisinage de son centre, et d'éviter d'en prendre en compte un parcours « marginal », n'en traversant qu'un bord, potentiellement involontaire. Le rayon de chaque cercle est défini en fonction de la taille de l'image de fond et du nombre N d'éléments graphiques à placer sur l'image de fond.

En variante, à chaque élément graphique est associé(e), plutôt qu'un cercle, une autre forme géométrique, par exemple une ellipse, un carré, un rectangle ou tout autre polygone centré sur lui dans lequel est inscrit, au moins partiellement, l'élément graphique, ou son enveloppe convexe. Comme plus haut, l'élément graphique et sa forme géométrique associée sont typiquement concentriques, et la position de l'élément graphique est définie par les coordonnées du centre de la forme géométrique associée. Comme plus haut, un point est considéré comme appartenant à l'élément graphique s'il est situé à l'intérieur de sa forme géométrique associée. Comme plus haut, l'association à un élément graphique, d'une forme géométrique dans laquelle il est partiellement inscrit a ainsi pour avantage de permettre de ne prendre en compte que les parcours « francs » de l'élément graphique, traversant un voisinage de son centre, et d'éviter d'en prendre en compte un parcours « marginal », n'en traversant qu'un bord, potentiellement involontaire.

Il est également envisageable de proposer des éléments graphiques de tailles différentes.

La distance D_{1,2} entre un premier élément graphique et un deuxième élément graphique est par exemple prise comme égale à la plus petite distance entre points des périmètres des cercles associés respectivement au premier élément graphique et au deuxième élément graphique.

Dans un autre exemple, la distance D_{1,2} est la distance séparant les centres des cercles associés respectivement au premier élément graphique et au deuxième élément graphique.

De préférence, le positionnement des premier et deuxième éléments graphiques est tel que la distance D_{1,2} est supérieure à la distance minimale Dₘᵢₙ prédéterminée. La distance Dₘᵢₙ peut être déterminée en fonction du nombre d'éléments graphiques à afficher et de la taille de l'image de saisie. Par exemple, pour une image de saisie rectangulaire de plus petite dimension d, et 10 à 14 éléments graphiques de taille d/8, la distance Dₘᵢₙ est comprise entre entre d/5 et d/10 ; elle est par exemple égale à d/6.

De préférence, la couleur et la texture des éléments graphiques sont choisies en fonction de la couleur et de la texture de l'image de fond, pour qu'une analyse automatique soit difficile, tout en restant lisibles par un utilisateur, c'est-à-dire pour rendre difficile la différenciation entre le contour des éléments graphiques et la texture sous-jacente.

Par exemple, le contraste local entre chaque élément graphique représentant un symbole et l'image de fond est diminué.

Par exemple, chaque élément graphique a une couleur proche de la couleur dominante de l'image de fond. Optionnellement, les éléments graphiques sont partiellement transparents afin de laisser apparaître la texture de l'image de fond.

En complément, les éléments graphiques peuvent être représentés de biais, ou floutés, de manière à augmenter la difficulté d'analyse automatique.

Lors de la génération de l'image numérique de saisie de code d'authentification, une information relative à la position de chaque élément graphique dans cette image de saisie est mémorisée, en lien avec le symbole représenté.

Dans un mode de réalisation, pour chaque élément graphique Gₖ, on mémorise dans un triplet (Sₖ, x_{Sk},y_{Sk}), un identifiant Sₖ du symbole représenté par Gₖ et une position (x_{Sk},y_{Sk}) de l'élément graphique Gₖ dans un référentiel associé à l'image de saisie.

Par exemple, (x_{Sk},y_{Sk}) sont les coordonnées du centre du cercle associé à l'élément graphique Gₖ.

On obtient alors une liste de N triplets {(*Sₖ,x_{Sk},y_{Sk}*),1 ≤ *k* ≤ *N*}.

Dans une variante, on mémorise une « image de symboles affichés », notée I_{S}, de la même taille en nombre de lignes et de colonnes de pixels que l'image numérique de saisie de code d'authentification. La valeur de chaque pixel de l'image I_{S} de symboles affichés identifie l'élément graphique que le pixel de même position spatiale de l'image de saisie contribue à afficher.

Chaque pixel de l'image I_{S} de symboles affichés contribuant à l'affichage d'un élément graphique donné prend donc une valeur choisie en fonction de cet élément graphique, les autres pixels de cette image I_{S} ayant une valeur par défaut prédéterminée, par exemple 255 lorsque les valeurs numériques des pixels sont représentées sur 8 bits. Pour chaque élément graphique on mémorise un identifiant Sₖ du symbole représenté.

L'étape 34 de génération d'une image numérique de saisie de code d'authentification est suivie d'une étape 36 d'envoi de cette image au terminal.

Le terminal reçoit l'image numérique de saisie de code d'authentification à l'étape de réception 38, et l'affiche sur l'écran d'affichage.

Cette image peut prendre une partie ou la totalité de l'écran d'affichage du terminal. Sa position d'affichage sur l'écran d'affichage est connue.

Le terminal se met alors en attente d'événements de déplacement du point d'application.

L'utilisateur saisit alors un code d'authentification dans l'image de saisie. A cet effet, à l'aide du dispositif de pointage, il effectue un tracé continu d'une trajectoire qui parcourt des éléments graphiques affichés dans un ordre tel que la séquence des symboles représentés par les éléments graphiques parcourus forme le code d'authentification, sans possibilité de sélectionner isolément des autres chacun des symboles, par un clic ou appui prolongé, par exemple.

Dans un mode de réalisation, un tel appui n'est pas pris en compte.

Dans un autre, un tel appui est pris en compte comme signal de fin de saisie.

Le code d'authentification peut contenir plusieurs fois le même symbole, ce qui peut se traduire par des boucles dans la trajectoire dessinée.

En variante, plusieurs éléments graphiques affichés représentent le même symbole.

La trajectoire est de forme quelconque, elle n'est pas linéaire par morceaux.

Dans un mode de réalisation optionnel, le tracé effectué par l'utilisateur est affiché au fur et à mesure, sensiblement en temps réel, en superposition sur l'image de saisie affichée, permettant ainsi à l'utilisateur de vérifier sa saisie.

Une succession de positions spatiales représentatives des points d'application successifs selon le tracé effectué par l'utilisateur est acquise et mémorisée à l'étape 40. Cette succession de positions spatiales (Xᵢ,Yᵢ), dans un référentiel associé à l'écran d'affichage, est représentative de la trajectoire suivie par le point d'application sur l'écran d'affichage du terminal.

Par exemple, lorsque le dispositif de pointage est un doigt de l'utilisateur, celui-ci trace une trajectoire T en faisant glisser son doigt. A la figure 4 est illustrée une trajectoire T entre un point de départ P_{d} de coordonnées (X₁,Y₁) et un point d'arrivée Pₐ de coordonnées (X_{Q}, Y_{Q}).

Il est à noter que certains des points de la succession de positions spatiales peuvent se situer en dehors de l'image de saisie, si celle-ci n'occupe pas la totalité de la surface de l'écran d'affichage.

Un arrêt du tracé par l'utilisateur est détecté à l'étape 42.

De préférence, on distingue entre un arrêt temporaire du tracé, par exemple pour des raisons de commodité pour l'utilisateur, et un arrêt pour validation du code d'authentification.

De préférence, il est prévu d'envoyer un signal de fin de saisie pour signifier l'arrêt pour validation du code d'authentification, par exemple, à l'aide d'une souris, un « double-clic » ou un appui sur un bouton d'arrêt affiché à l'écran.

A l'étape 44, il est déterminé si l'arrêt effectué par l'utilisateur correspond à un signal de fin de saisie.

En cas de réponse négative, l'étape 44 est suivie de l'étape 40 précédemment décrite, pour donner à l'utilisateur la possibilité de continuer le tracé de la trajectoire.

En cas de réponse positive, l'étape 44 est suivie d'une étape 46 d'envoi des données représentatives de la trajectoire du point d'application sur l'image de saisie au serveur 4, qui reçoit ces données à l'étape de réception de trajectoire 48.

Ainsi, le serveur 4 obtient à l'étape 48 la liste de coordonnées spatiales représentatives des points de la trajectoire.

Par exemple, les données transmises sont les coordonnées spatiales successives {(x₁,y₁),...,(xᵢ,yᵢ),..., (x_{Q},y_{Q})} du point d'application selon le tracé effectué par l'utilisateur, dans un référentiel associé à l'image de saisie. Le nombre Q des coordonnées spatiales successives, définissant la trajectoire, est largement supérieur au nombre de symboles formant le code d'authentification à valider, de préférence d'un facteur supérieur ou égal à 10, et par exemple égal à 20, 50 ou 80.

En variante, les données transmises sont des données caractéristiques des déplacements successifs entre points d'application consécutifs.

Par exemple, les coordonnées spatiales (x,y), x étant un indice de ligne et y un indice de colonne, sont indiquées dans le référentiel ayant pour origine le coin supérieur gauche de l'image de saisie.

Dans le cas où l'image de saisie n'occupe pas la totalité de l'écran d'affichage, les coordonnées (xᵢ,yᵢ) dans le référentiel de l'image de saisie sont calculées, par translation, à partir des coordonnées (Xᵢ,Yᵢ) dans le référentiel de l'écran d'affichage du terminal.

Dans le cas, illustré à la figure 4, dans lequel certains points de la trajectoire se trouvent en dehors de l'image de saisie (par exemple le point P_{d}), leurs coordonnées dans le référentiel de l'image de saisie sont négatives.

L'étape 48 est suivie d'une étape 50, mise en oeuvre par le serveur, d'analyse des données représentatives de la trajectoire formée dans l'image de saisie, et de détermination d'une séquence d'éléments graphiques parcourus.

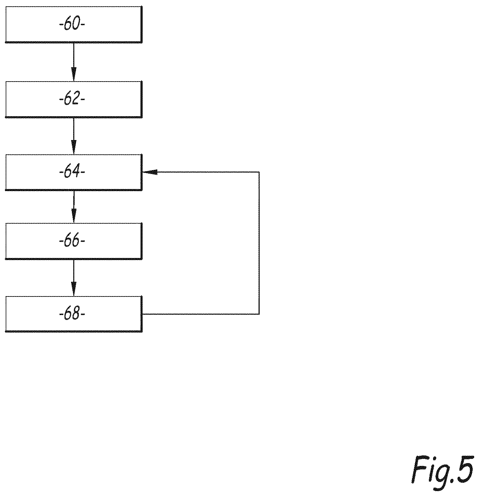

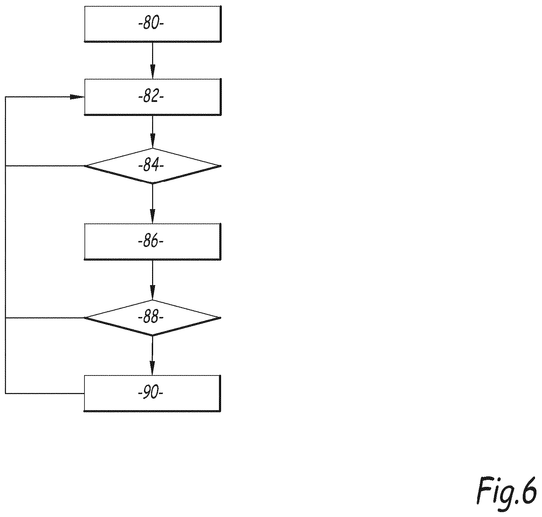

Plusieurs modes de réalisation sont envisagés pour effectuer l'analyse de la trajectoire, et sont détaillés ci-après en référence aux figures 5 et 6.

Un code d'authentification est déterminé à l'étape 52 à partir de la séquence d'éléments graphiques parcourus extraite de la trajectoire.

Le code d'authentification est déterminé comme la séquence des symboles représentés par les éléments graphiques successifs de la séquence des éléments graphiques parcourus.

L'étape 52 est suivie d'une étape 54 de validation du code d'authentification, mettant en oeuvre une comparaison du code d'authentification déterminé à l'étape 52 par rapport à un ou plusieurs code(s) d'authentification préalablement mémorisé(s) en association avec l'identifiant de l'utilisateur.

Si le code d'authentification obtenu est identique à un code d'authentification préalablement mémorisé en association avec l'identifiant de l'utilisateur, l'authentification de l'utilisateur est validée.

Si le code d'authentification obtenu n'est identique à aucun des codes d'authentification mémorisés en association avec l'identifiant de l'utilisateur, l'authentification de l'utilisateur est refusée.

Le résultat de l'étape de validation 54, acceptation ou refus, est envoyé au terminal lors d'une étape d'envoi 56.

Le résultat de la validation du code d'authentification est reçu par le terminal à l'étape de réception de validation 58.

En fonction du résultat, l'accès demandé par l'utilisateur est autorisé ou refusé.

La figure 5 est un synoptique des principales étapes d'un premier mode de réalisation de l'étape 50 d'analyse des données représentatives de la trajectoire formée dans l'image de saisie, et de détermination d'une séquence d'éléments graphiques parcourus.

Les données représentatives de la trajectoire sont des coordonnées, fournies sous forme de liste de couples de coordonnées {(x₁,y₁),...,(xᵢ,yᵢ),..., (x_{Q},y_{Q})}, chaque couple de coordonnées (xᵢ,yᵢ) identifiant un point d'application Pi correspondant, la liste étant triée dans l'ordre chronologique de formation de la trajectoire lorsque i croît.

Dans ce premier mode de réalisation, les éléments graphiques de l'image de saisie de code d'authentification ont été mémorisés sous forme de triplets comportant chacun un identifiant de symbole Sₖ associé à une position (xₛₖ,yₛₖ). Les coordonnées mémorisées (xₛₖ,yₛₖ) sont les coordonnées du point central de la forme géométrique associée à l'élément graphique.

Lors d'une première étape 60 les données (xₛₖ,yₛₖ) représentatives des positions des éléments graphiques représentant les symboles Sₖ dans l'image de saisie sont obtenues, par exemple par lecture dans une mémoire. Par exemple, la position d'un élément graphique est la position du centre CS de la forme géométrique, par exemple du cercle, associée à l'élément graphique.

En outre, on associe à chaque élément graphique affiché une distance d'entrée D_{E} et une distance de sortie D_{S}. On considère alors que la trajectoire commence un parcours d'un élément graphique si le point d'application passe d'une position distante de plus de D_{E} du centre de l'élément graphique, à une position distante de moins de D_{E} du centre de l'élément graphique. Réciproquement, on considère que la trajectoire finit un parcours d'un élément graphique si le point d'application passe d'une position distante de moins de D_{S} du centre de l'élément graphique, à une position distante de plus de D_{S} du centre de l'élément graphique. Cela revient à associer à l'élément graphique deux cercles de rayons D_{E} et D_{S}.

Dans un mode de réalisation, les distances d'entrée D_{E} et de sortie D_{S} sont toutes deux égales et les cercles associés confondus. Dans ce mode de réalisation, les cercles associés aux éléments graphiques affichés n'ont pas d'intersection.

Dans un mode de réalisation alternatif, les distances D_{E} et D_{S} sont différentes. De préférence, D_{E} est inférieure à D_{S}. Ce mode de réalisation permet d'augmenter encore l'avantage exposé plus haut de l'association à un élément graphique d'une forme géométrique dans laquelle il est partiellement inscrit, en requérant, pour considérer que la trajectoire finit un parcours de l'élément graphique, que le point d'application s'éloigne de son centre d'une distance supérieure à celle à laquelle il doit s'en approcher pour que soit considéré qu'elle le commence, c'est-à-dire en optimisant séparément les distances caractérisant le début et la fin d'un parcours « franc » de l'élément graphique.

Dans un autre mode de réalisation alternatif, les distances d'entrée D_{E} et de sortie D_{S} dépendent de l'élément graphique considéré. Ce mode de réalisation s'applique particulièrement au cas où les éléments graphiques représentent des objets codant chacun un symbole.

Ensuite à l'étape d'initialisation 62 de variables, une variable « élément graphique courant » SC est initialisée à « vide ». De même, une séquence MP d'identifiants d'éléments graphiques parcourus est initialisée à une liste vide. Par exemple, chaque élément graphique est identifié par un indice.

A l'étape 64, le couple de coordonnées (xᵢ,yᵢ) non encore traité de plus petit index i est extrait à partir de la liste de coordonnées reçue.

A l'étape suivante 66, seulement si la variable élément graphique courant SC n'est pas vide (c'est-à-dire que la variable SC contient une valeur d'élément graphique en cours de parcours, on détermine si le parcours de cet élément graphique est terminé) :
- la distance euclidienne Dᵢ entre le point (xᵢ,yᵢ) courant et la position (x_{SC}, ysc) de l'élément graphique en cours de parcours est calculée ;
- si Dᵢ est supérieure à Ds, alors SC est réinitialisée à « vide ».

Ensuite, à l'étape 68, seulement si la variable élément graphique courant est vide (c'est-à-dire que la variable élément graphique courant SC ne contient pas de valeur parce qu'aucun élément graphique n'est en cours de parcours, on détermine si un nouveau parcours d'un élément graphique a commencé) :
- pour chaque point central CSⱼ associé à un élément graphique Gⱼ,
   ∘ la distance euclidienne Dⱼ entre le point (xᵢ,yᵢ) courant et le point CSⱼ est calculée, puis
   ∘ seulement si Dⱼ est inférieure à D_{E},
      ▪ un identifiant de l'élément graphique de point central CSⱼ est ajouté à MP, et
      ▪ SC prend CSⱼ pour valeur.

L'étape 68 est suivie par l'étape 64 pour traitement du point suivant de la liste de coordonnées {(xᵢ, yᵢ)}.

Les étapes 64 à 68 sont itérées jusqu'à ce que tous les points de la liste de coordonnées {(xᵢ, yᵢ)} soient traités.

Lorsque tous les points ont été traités, on obtient la séquence MP complète des identifiants des éléments graphiques parcourus.

Dans un mode de réalisation alternatif, il est possible d'affiner la liste des points de la trajectoire en appliquant une interpolation, de degré sélectionné, à partir de la liste acquise de leurs couples de coordonnées, et de la ré-échantillonner plus finement, afin de disposer d'un nombre plus élevé de points de trajectoire successifs.

La distance entre deux points successifs du nouvel échantillonnage doit alors typiquement être inférieure à la taille du plus petit élément graphique.

Un tel affinement permet d'obtenir une liste augmentée de coordonnées spatiales représentatives de points de la trajectoire, ce qui permet d'assurer la détermination des éléments graphiques parcourus.

Dans une autre variante, une courbe d'interpolation, de degré sélectionné, de la liste acquise des couples de coordonnées des points de la trajectoire, peut être considérée comme trajectoire à analyser. On s'intéresse alors aux points d'intersection entre la trajectoire obtenue par interpolation et les formes géométriques associées aux éléments graphiques. En particulier, il est alors possible de déterminer précisément le point de début et le point de fin d'un parcours d'un élément graphique représentant un symbole, sur la base des algorithmes classiques et des équations de la courbe d'interpolation et des formes géométriques associées aux éléments graphiques.

La figure 6 est un synoptique des principales étapes d'un deuxième mode de réalisation de l'étape 50 d'analyse des données représentatives de la trajectoire formée dans l'image de saisie, et de détermination d'une séquence d'éléments graphiques parcourus.

Dans ce mode de réalisation, le serveur 4 a mémorisé une image I_{S} de symboles affichés, dans laquelle chaque pixel contribuant à l'affichage d'un élément graphique représentant un symbole donné, prend une valeur choisie en fonction d'un identifiant de cet élément graphique, les autres pixels de cette image I_{S} ayant une valeur par défaut prédéterminée V₀ indicative du fait que le pixel affiché à la position spatiale correspondante n'appartient pas à un élément graphique représentant un symbole. Pour simplifier, V₀ est appelée valeur indicative d'absence d'élément graphique.

Lors d'une première étape 80 d'initialisation, une variable « identifiant d'élément graphique courant » GC est initialisée à « vide ». De même, une séquence MP d'identifiants d'éléments graphiques parcourus est initialisée à une liste vide.

Ensuite, lors de l'étape 82, le couple de coordonnées (xᵢ,yᵢ) non encore traité de plus petit index i est extrait à partir de la liste de coordonnées reçue.

Lors de l'étape suivante 84, la valeur du pixel de coordonnées (x_{i,}yᵢ) dans l'image des symboles I_{S}, noté I_{S}(xᵢ,yᵢ), est comparée à la valeur prédéterminée V₀ indicative de l'absence d'élément graphique à l'emplacement de coordonnées (xᵢ,yᵢ).

En cas d'égalité, l'étape 84 est suivie par l'étape 82 préalable, pour traitement du point suivant de la liste de coordonnées {(xᵢ, yᵢ)}.

Dans le cas où I_{S}(xᵢ,yᵢ) n'est pas égale à la valeur prédéterminée V₀, on détermine à l'étape suivante 86 un identifiant Gₖ de l'élément graphique parcouru.

L'identifiant Gₖ est comparé à l'identifiant d'élément graphique courant mémorisé dans la variable GC à l'étape 88, et en cas de comparaison positive, l'étape 88 est suivie par l'étape 82 préalable, pour traitement du point suivant de la liste de coordonnées {(xᵢ, yᵢ)}. En effet, on peut déduire dans ce cas qu'un même élément graphique Gₖ est indiqué par plusieurs points de la trajectoire tracée par l'utilisateur.

Si à l'étape 88 la comparaison est négative, il s'agit d'un nouvel élément graphique parcouru par la trajectoire tracée par l'utilisateur.

A l'étape suivante 90, la variable GC est modifiée pour prendre la valeur Gₖ, d'identifiant de l'élément graphique parcouru, et cet identifiant est également ajouté à la séquence MP d'identifiants d'éléments graphiques parcourus.

L'étape 90 est à nouveau suivie de l'étape 82 pour traitement du point suivant de la liste de coordonnées {(xᵢ, yᵢ)}.

L'algorithme prend fin lorsque tous les points de la liste de coordonnées {(xᵢ, yᵢ)} ont été traités.

Avantageusement, les étapes de génération d'une image numérique de saisie de code d'authentification et d'analyse des données représentatives de la trajectoire reçue, de détermination de code d'authentification saisi et de validation du code d'authentification saisi sont effectuées dans l'environnement sécurisé du serveur, ce qui permet d'augmenter la sécurité et la robustesse par rapport à d'éventuelles attaques par des logiciels malveillants.

Avantageusement, l'image numérique de saisie de code d'authentification est générée de sorte qu'une analyse automatique pour détecter les symboles alphanumériques affichés soit complexe.

De plus, l'utilisation d'un tracé continu ou quasi-continu d'une trajectoire parcourant des éléments graphiques représentant les symboles formant le code d'authentification rend bien plus difficile le piratage par capture de la sortie du dispositif de pointage que lorsque l'utilisateur clique successivement, un par un et isolément, sur les symboles formant le code d'authentification.

L'invention a été décrite ci-dessus, notamment en référence à la figure 2, en distinguant un premier ensemble 30A d'étapes mises en oeuvre sur le terminal 2, et un deuxième ensemble 30B d'étapes mises en oeuvre par le serveur 4.

Selon une variante, le terminal et le serveur sont intégrés dans un même dispositif de validation de code d'authentification. géométrique dans laquelle il est partiellement inscrit, en requérant, pour considérer que la trajectoire finit un parcours de l'élément graphique, que le point d'application s'éloigne de son centre d'une distance supérieure à celle à laquelle il doit s'en approcher pour que soit considéré qu'elle le commence, c'est-à-dire en optimisant séparément les distances caractérisant le début et la fin d'un parcours « franc » de l'élément graphique.

Dans un autre mode de réalisation alternatif, les distances d'entrée D_{E} et de sortie D_{S} dépendent de l'élément graphique considéré. Ce mode de réalisation s'applique particulièrement au cas où les éléments graphiques représentent des objets codant chacun un symbole.

Ensuite à l'étape d'initialisation 62 de variables, une variable « élément graphique courant » SC est initialisée à « vide ». De même, une séquence MP d'identifiants d'éléments graphiques parcourus est initialisée à une liste vide. Par exemple, chaque élément graphique est identifié par un indice.

A l'étape 64, le couple de coordonnées (xᵢ,yᵢ) non encore traité de plus petit index i est extrait à partir de la liste de coordonnées reçue.

A l'étape suivante 66, seulement si la variable élément graphique courant SC n'est pas vide (c'est-à-dire que la variable SC contient une valeur d'élément graphique en cours de parcours, on détermine si le parcours de cet élément graphique est terminé) :
- la distance euclidienne Dᵢ entre le point (xᵢ,yᵢ) courant et la position (x_{SC}, ysc) de l'élément graphique en cours de parcours est calculée ;
- si Dᵢ est supérieure à Ds, alors SC est réinitialisée à « vide ».

Ensuite, à l'étape 68, seulement si la variable élément graphique courant est vide (c'est-à-dire que la variable élément graphique courant SC ne contient pas de valeur parce qu'aucun élément graphique n'est en cours de parcours, on détermine si un nouveau parcours d'un élément graphique a commencé) :
- pour chaque point central CSⱼ associé à un élément graphique Gⱼ,
   ∘ la distance euclidienne Dⱼ entre le point (xᵢ,yᵢ) courant et le point CSⱼ est calculée, puis
   ∘ seulement si Dⱼ est inférieure à D_{E},
      ▪ un identifiant de l'élément graphique de point central CSⱼ est ajouté à MP, et
      ▪ SC prend CSⱼ pour valeur.

L'étape 68 est suivie par l'étape 64 pour traitement du point suivant de la liste de coordonnées {(xᵢ, yᵢ)}.

Les étapes 64 à 68 sont itérées jusqu'à ce que tous les points de la liste de coordonnées {(xᵢ, yᵢ)} soient traités.

Lorsque tous les points ont été traités, on obtient la séquence MP complète des identifiants des éléments graphiques parcourus.

Dans un mode de réalisation alternatif, il est possible d'affiner la liste des points de la trajectoire en appliquant une interpolation, de degré sélectionné, à partir de la liste acquise de leurs couples de coordonnées, et de la ré-échantillonner plus finement, afin de disposer d'un nombre plus élevé de points de trajectoire successifs.

La distance entre deux points successifs du nouvel échantillonnage doit alors typiquement être inférieure à la taille du plus petit élément graphique.

Un tel affinement permet d'obtenir une liste augmentée de coordonnées spatiales représentatives de points de la trajectoire, ce qui permet d'assurer la détermination des éléments graphiques parcourus.

Dans une autre variante, une courbe d'interpolation, de degré sélectionné, de la liste acquise des couples de coordonnées des points de la trajectoire, peut être considérée comme trajectoire à analyser. On s'intéresse alors aux points d'intersection entre la trajectoire obtenue par interpolation et les formes géométriques associées aux éléments graphiques. En particulier, il est alors possible de déterminer précisément le point de début et le point de fin d'un parcours d'un élément graphique représentant un symbole, sur la base des algorithmes classiques et des équations de la courbe d'interpolation et des formes géométriques associées aux éléments graphiques.

La figure 6 est un synoptique des principales étapes d'un deuxième mode de réalisation de l'étape 50 d'analyse des données représentatives de la trajectoire formée dans l'image de saisie, et de détermination d'une séquence d'éléments graphiques parcourus.

Dans ce mode de réalisation, le serveur 4 a mémorisé une image I_{S} de symboles affichés, dans laquelle chaque pixel contribuant à l'affichage d'un élément graphique représentant un symbole donné, prend une valeur choisie en fonction d'un identifiant de cet élément graphique, les autres pixels de cette image I_{S} ayant une valeur par défaut prédéterminée V₀ indicative du fait que le pixel affiché à la position spatiale correspondante n'appartient pas à un élément graphique représentant un symbole. Pour simplifier, V₀ est appelée valeur indicative d'absence d'élément graphique.

Lors d'une première étape 80 d'initialisation, une variable « identifiant d'élément graphique courant » GC est initialisée à « vide ». De même, une séquence MP d'identifiants d'éléments graphiques parcourus est initialisée à une liste vide.

Ensuite, lors de l'étape 82, le couple de coordonnées (xᵢ,yᵢ) non encore traité de plus petit index i est extrait à partir de la liste de coordonnées reçue.

Lors de l'étape suivante 84, la valeur du pixel de coordonnées (xᵢ,yᵢ) dans l'image des symboles I_{S}, noté I_{S}(xᵢ,yᵢ), est comparée à la valeur prédéterminée V₀ indicative de l'absence d'élément graphique à l'emplacement de coordonnées (xᵢ,yᵢ).

En cas d'égalité, l'étape 84 est suivie par l'étape 82 préalable, pour traitement du point suivant de la liste de coordonnées {(xᵢ, yᵢ)}.

Dans le cas où I_{S}(xᵢ,yᵢ) n'est pas égale à la valeur prédéterminée V₀, on détermine à l'étape suivante 86 un identifiant Gₖ de l'élément graphique parcouru.

L'identifiant Gₖ est comparé à l'identifiant d'élément graphique courant mémorisé dans la variable GC à l'étape 88, et en cas de comparaison positive, l'étape 88 est suivie par l'étape 82 préalable, pour traitement du point suivant de la liste de coordonnées {(xᵢ, yᵢ)}. En effet, on peut déduire dans ce cas qu'un même élément graphique Gₖ est indiqué par plusieurs points de la trajectoire tracée par l'utilisateur.

Si à l'étape 88 la comparaison est négative, il s'agit d'un nouvel élément graphique parcouru par la trajectoire tracée par l'utilisateur.

A l'étape suivante 90, la variable GC est modifiée pour prendre la valeur Gₖ, d'identifiant de l'élément graphique parcouru, et cet identifiant est également ajouté à la séquence MP d'identifiants d'éléments graphiques parcourus.

L'étape 90 est à nouveau suivie de l'étape 82 pour traitement du point suivant de la liste de coordonnées {(xᵢ, yᵢ)}.

L'algorithme prend fin lorsque tous les points de la liste de coordonnées {(xᵢ, yᵢ)} ont été traités.

Avantageusement, les étapes de génération d'une image numérique de saisie de code d'authentification et d'analyse des données représentatives de la trajectoire reçue, de détermination de code d'authentification saisi et de validation du code d'authentification saisi sont effectuées dans l'environnement sécurisé du serveur, ce qui permet d'augmenter la sécurité et la robustesse par rapport à d'éventuelles attaques par des logiciels malveillants.

Avantageusement, l'image numérique de saisie de code d'authentification est générée de sorte qu'une analyse automatique pour détecter les symboles alphanumériques affichés soit complexe.

De plus, l'utilisation d'un tracé continu ou quasi-continu d'une trajectoire parcourant des éléments graphiques représentant les symboles formant le code d'authentification rend bien plus difficile le piratage par capture de la sortie du dispositif de pointage que lorsque l'utilisateur clique successivement, un par un et isolément, sur les symboles formant le code d'authentification.

L'invention a été décrite ci-dessus, notamment en référence à la figure 2, en distinguant un premier ensemble 30A d'étapes mises en oeuvre sur le terminal 2, et un deuxième ensemble 30B d'étapes mises en oeuvre par le serveur 4.

Selon une variante, le terminal et le serveur sont intégrés dans un même dispositif de validation de code d'authentification.

## Revendications

1. Procédé de validation de code d'authentification permettant à un utilisateur autorisé à accéder à un service ou un système informatique, le code d'authentification étant une séquence de symboles saisis par l'intermédiaire d'une interface homme-machine d'un terminal utilisateur, comportant des étapes d'affichage, sur un écran d'affichage du terminal utilisateur, d'une image numérique de saisie de code d'authentification comportant en superposition sur une image de fond une pluralité de symboles, d'obtention d'un code d'authentification saisi par un utilisateur par sélection de symboles parmi les symboles affichés, et de comparaison du code d'authentification saisi à un code d'authentification préalablement enregistré,
procédé **caractérisé en ce qu'**il comporte,
préalablement à l'étape d'affichage (38), des étapes, mises en oeuvre par un serveur adapté à communiquer avec le terminal utilisateur, de :
- superposition (34) sur l'image de fond d'éléments graphiques à des positions déterminées aléatoirement, chaque élément graphique étant représentatif d'un symbole sélectionnable, pour former l'image numérique de saisie de code d'authentification ;
- mémorisation (34), pour chaque élément graphique, d'au moins une information relative au symbole représenté et à la position de l'élément graphique dans l'image numérique de saisie de code d'authentification ;
et après l'étape d'affichage (38), des étapes de :
- obtention (40, 42, 44, 48) d'une succession de coordonnées spatiales représentatives des positions successives d'un point d'application déplacé sur l'image numérique de saisie de code d'authentification par l'intermédiaire d'un dispositif de pointage, formant ainsi une trajectoire continue, ladite trajectoire parcourant des éléments graphiques affichés, ladite succession de coordonnées spatiales formant une liste de coordonnées spatiales représentatives de points de la trajectoire ;
- détermination (50) par le serveur, à partir de ladite succession de coordonnées spatiales, d'une séquence de symboles formant un code d'authentification.

2. Procédé de validation de code d'authentification selon la revendication 1, dans lequel la formation (34) d'une image numérique de saisie de code d'authentification comporte l'obtention parmi un ensemble d'images de fond prédéterminées ou la génération à la volée d'une image de fond texturée et/ou comportant des détails à fort contraste.

3. Procédé de validation de code d'authentification selon l'une quelconque des revendications 1 ou 2, dans lequel deux éléments graphiques voisins sont distants d'une distance supérieure ou égale à une distance minimale prédéterminée.

4. Procédé de validation de code d'authentification selon l'une des revendications 1 à 3, dans lequel chaque élément graphique a des propriétés de texture et/ou de couleur et/ou de transparence choisies en fonction de l'image de fond, de manière à diminuer un contraste local par rapport à ladite image de fond.

5. Procédé de validation de code d'authentification selon l'une quelconque des revendications 1 à 4, comportant une étape d'interpolation à partir de la succession de coordonnées spatiales représentatives des positions successives du point d'application, suivie d'une étape de ré-échantillonnage permettant d'obtenir une liste d'effectif augmenté de coordonnées spatiales représentatives de points de la trajectoire.

6. Procédé de validation de code d'authentification selon l'une quelconque des revendications précédentes, dans lequel l'information relative au symbole représenté par un élément graphique et à la position dudit élément graphique dans l'image numérique de saisie de code d'authentification consiste en un triplet comprenant un identifiant dudit symbole et deux coordonnées d'un point central associé à l'élément graphique, ledit point central étant le centre d'une forme géométrique dans laquelle l'élément graphique d'affichage est au moins partiellement inscrit.

7. Procédé de validation de code d'authentification selon la revendication 6, dans lequel la détermination (50) d'une séquence de symboles formant le code d'authentification comporte, pour chaque point de la trajectoire :
un calcul (66, 68) de distance entre ledit point de la trajectoire et au moins un point central associé à un élément graphique,
une comparaison (68) de la distance calculée à une distance d'entrée prédéterminée et/ou
une comparaison (66) de la distance calculée à une distance de sortie prédéterminée, et,
en fonction du résultat desdites comparaisons (66, 68), un ajout d'un identifiant de l'élément graphique dans une liste d'identifiants d'éléments graphiques parcourus.

8. Procédé de validation de code d'authentification selon la revendication 7, dans lequel ladite distance d'entrée est inférieure à ladite distance de sortie.

9. Procédé de validation de code d'authentification selon l'une quelconque des revendications 1 à 5, comportant la mémorisation d'une image de symboles affichés comportant des pixels, chaque pixel ayant une position spatiale et une valeur, la valeur étant représentative d'un élément graphique affiché à la position spatiale correspondante ou de l'absence d'élément graphique affiché à la position spatiale correspondante, et comportant la mémorisation, pour chaque élément graphique, d'un identifiant du symbole qu'il représente, la détermination (50) d'une séquence de symboles formant le code d'authentification comportant :
- pour chaque point de la trajectoire, une détermination (84) de la valeur du pixel de même position spatiale que le point de la trajectoire dans l'image de symboles affichés, et, en fonction d'une correspondance (86, 88) entre ladite valeur de pixel et un élément graphique affiché à la position spatiale correspondante, un ajout (90) d'un identifiant dudit élément graphique dans une liste d'identifiants d'éléments graphiques parcourus.

10. Procédé de validation de code d'authentification selon l'une quelconque des revendications 1 à 9, dans lequel chacun desdits éléments graphiques comporte un tracé du symbole qu'il représente.

11. Procédé de validation de code d'authentification selon l'une quelconque des revendications 1 à 9, dans lequel chacun desdits éléments graphiques comporte un tracé d'un objet codant le symbole qu'il représente.

12. Procédé de validation de code d'authentification selon l'une quelconque des revendications 1 à 11, dans lequel l'étape d'obtention d'une succession de coordonnées spatiales représentatives des positions successives du point d'application comporte en outre une réception (44) d'un signal de fin de saisie.

13. Programme d'ordinateur comportant des instructions pour mettre en oeuvre les étapes d'un procédé de validation de code d'authentification selon les revendications 1 à 12 lors de l'exécution du programme par un processeur d'un dispositif programmable.

14. Dispositif de validation de code d'authentification permettant à un utilisateur autorisé à accéder à un service ou un système informatique, le code d'authentification étant une séquence de symboles saisis par l'intermédiaire d'une interface homme-machine d'un terminal utilisateur, le dispositif comportant une unité centrale de calcul comportant un ou plusieurs processeurs, **caractérisé en ce qu'**il comporte des modules mis en oeuvre par ladite unité central de calcul et adaptés à :
- superposer sur une image de fond d'éléments graphiques à des positions déterminées aléatoirement, chaque élément graphique étant représentatif d'un symbole sélectionnable, pour former l'image numérique de saisie de code d'authentification ;
- pour chaque élément graphique, mémoriser au moins une information relative au symbole représenté et à la position de l'élément graphique dans l'image numérique de saisie de code d'authentification ;
- fournir l'image numérique de saisie de code d'authentification à un terminal d'utilisateur ;
- obtenir une succession de coordonnées spatiales représentatives des positions successives d'un point d'application déplacé sur l'image numérique de saisie de code d'authentification par l'intermédiaire d'un dispositif de pointage, formant ainsi une trajectoire continue, ladite trajectoire parcourant des éléments graphiques affichés, ladite succession de coordonnées spatiales formant une liste de coordonnées spatiales représentatives de points de la trajectoire ;
- déterminer une séquence de symboles formant un code d'authentification à partir de ladite succession de coordonnées spatiales.

15. Système de validation de code d'authentification permettant à un utilisateur autorisé à accéder à un service ou un système informatique, comportant un terminal utilisateur adapté à communiquer avec un serveur via un réseau de communications,
le code d'authentification étant une séquence de symboles saisis par l'intermédiaire d'une interface homme-machine du terminal utilisateur,
le terminal comportant un écran d'affichage et étant adapté à afficher sur l'écran d'affichage une image numérique de saisie de code d'authentification comportant en superposition sur une image de fond une pluralité de symboles,
le serveur étant adapté à obtenir un code d'authentification saisi par un utilisateur par sélection de symboles parmi les symboles affichés, et à comparer code d'authentification saisi à un code d'authentification préalablement enregistré,
le système étant **caractérisé en ce que** le serveur comporte des modules adaptés à, préalablement à l'étape d'affichage :
- superposer sur l'image de fond d'éléments graphiques à des positions déterminées aléatoirement, chaque élément graphique étant représentatif d'un symbole sélectionnable, pour former l'image numérique de saisie de code d'authentification ;
- pour chaque élément graphique, mémoriser au moins une information relative au symbole représenté et à la position de l'élément graphique dans l'image numérique de saisie de code d'authentification ;
et après l'affichage, le système comportant des modules adaptés à :
- obtenir une succession de coordonnées spatiales représentatives des positions successives d'un point d'application déplacé sur l'image numérique de saisie de code d'authentification par l'intermédiaire d'un dispositif de pointage, formant ainsi une trajectoire continue, ladite trajectoire parcourant des éléments graphiques affichés, ladite succession de coordonnées spatiales formant une liste de coordonnées spatiales représentatives de points de la trajectoire;
- déterminer par le serveur une séquence de symboles parcourus à partir de ladite succession de coordonnées spatiales.

## Patentansprüche

1. Verfahren zur Bestätigung eines Authentifizierungscodes, der einem autorisierten Benutzer den Zugriff auf einen Dienst oder ein Informatiksystem ermöglicht, wobei der Authentifizierungscode eine Folge von Symbolen ist, die über eine Mensch-Maschine-Schnittstelle eines Benutzerendgeräts eingegeben werden, mit den Schritten Anzeigen eines digitalen Bildes auf einem digitalen Anzeigebildschirm des Benutzerendgeräts zur Eingabe eines Authentifizierungscodes, das auf einem Hintergrundbild eine Vielzahl von Symbolen überlagert, Erhalten eines von einem Benutzer eingegebenen Authentifizierungscodes durch Auswahl von Symbolen unter den angezeigten Symbolen und Vergleich des eingegebenen Authentifizierungscodes mit einem zuvor gespeicherten Authentifizierungscode,
wobei das Verfahren Folgendes umfasst:
vor dem Anzeigeschritt (38) Schritte, die von einem Server implementiert werden, der dazu geeignet ist, mit dem Benutzerendgerät zu kommunizieren:
- Überlagern (34) des Hintergrundbildes mit grafischen Elementen an zufällig ausgewählten Positionen, wobei jedes grafische Element ein auswählbares Symbol repräsentiert, um das digitale Bild zur Eingabe des Authentifizierungscodes zu bilden;
- Speichern (34), für jedes grafische Element, von mindestens einer Information bezüglich des dargestellten Symbols und der Position des grafischen Elements in dem digitalen Bild zur Eingabe eines Authentifizierungscodes ;
und nach dem Anzeigeschritt (38) die Schritte:
- Erhalten (40, 42, 44, 48) einer Folge von Raumkoordinaten, die repräsentativ für die aufeinanderfolgenden Positionen eines Anwendungspunktes sind, der auf dem digitalen Bild zur Eingabe des Authentifizierungscodes durch einen Zeiger bewegt wird. So wird eine durchgehende Bahn gebildet, die die angezeigten graphischen Elemente durchläuft. Die Folge von Raumkoordinaten bildet eine Liste von Raumkoordinaten, die für Punkte auf der Bahn repräsentativ sind;
- Bestimmung (50) einer Sequenz von Symbolen, die einen Authentifizierungscode bilden, aus der Folge von Raumkoordinaten durch den Server.

2. Verfahren zur Bestätigung eines Authentifizierungscodes nach Anspruch 1, bei dem die Bildung (34) eines digitalen Bildes zur Eingabe eines Authentifizierungscodes den Erhalt aus einem Satz von vorher festgelegten Hintergrundbildern umfasst, oder die on-thefly-Erzeugung eines Hintergrundbildes mit Texturen und/oder kontrastreichen Details.

3. Verfahren zur Bestätigung eines Authentifizierungscodes nach einem der Ansprüche 1 oder 2, wobei zwei benachbarte grafische Elemente einen Abstand aufweisen, der größer oder gleich einem vorbestimmten Mindestabstand ist.

4. Verfahren zur Bestätigung eines Authentifizierungscodes nach einem der Ansprüche 1 bis 3, wobei jedes grafische Element Textur- und/oder Farb- und/oder Transparenzeigenschaften aufweist, die in Abhängigkeit vom Hintergrundbild so gewählt werden, dass ein lokaler Kontrast in Bezug auf das Hintergrundbild verringert wird.

5. Verfahren zur Bestätigung eines Authentifizierungscodes nach einem der Ansprüche 1 bis 4, mit einem Interpolationsschritt, ausgehend von der Folge von Raumkoordinaten, die die aufeinanderfolgenden Positionen des Anwendungspunkts repräsentieren, gefolgt von einem Resampling-Schritt, der es ermöglicht, eine Liste mit einer erhöhten Anzahl von Raumkoordinaten zu erhalten, die für Punkte auf der Bahn repräsentativ sind.

6. Verfahren zur Bestätigung eines Authentifizierungscodes nach einem der vorhergehenden Ansprüche, bei dem die Information über das durch ein grafisches Element dargestellte Symbol und die Position des grafischen Elements in dem digitalen Bild zur Eingabe des Authentifizierungscodes aus einem Tripel besteht, das eine Kennung des Symbols und zwei Koordinaten eines mit dem grafischen Element verbundenen Mittelpunkts umfasst, wobei der Mittelpunkt das Zentrum einer geometrischen Form ist, in die das grafische Anzeigeelement zumindest teilweise eingeschrieben ist.

7. Verfahren zur Bestätigung eines Authentifizierungscodes nach Anspruch 6, bei dem die Bestimmung (50) einer Sequenz von Symbolen, die den Authentifizierungscode bilden, für jeden Punkt der Bahn Folgendes umfasst:
eine Berechnung (66, 68) des Abstands zwischen dem Punkt auf der Bahn und mindestens einem zentralen Punkt, der mit einem grafischen Element verbunden ist,
einen Vergleich (68) der berechneten Distanz mit einer vorbestimmten Eingangsdistanz und/oder
einen Vergleich (66) der berechneten Distanz mit einer vorbestimmten Ausgangsdistanz, und,
in Abhängigkeit von dem Ergebnis der Vergleiche (66, 68) ein Hinzufügen einer Kennung des Grafikelements zu einer Liste von Kennungen von durchlaufenen Grafikelementen.

8. Verfahren zur Bestätigung eines Authentifizierungscodes nach Anspruch 7, wobei die Eingangsdistanz kleiner als die Ausgangsdistanz ist.

9. Verfahren zur Bestätigung eines Authentifizierungscodes nach einem der Ansprüche 1 bis 5, umfassend das Speichern eines Bildes von angezeigten Symbolen, das Pixel umfasst, wobei jedes Pixel eine räumliche Position und einen Wert hat, wobei der Wert repräsentativ ist für ein angezeigtes graphisches Element an der entsprechenden räumlichen Position oder für das Fehlen eines an der entsprechenden räumlichen Position angezeigten grafischen Elements steht, und das Speichern einer Kennung des Symbols, das es darstellt, für jedes grafische Element umfasst, wobei die Bestimmung (50) einer Sequenz von Symbolen, die den Authentifizierungscode bilden, Folgendes umfasst:
- für jeden Punkt auf der Bahn, eine Bestimmung (84) des Wertes des Pixels mit derselben räumlichen Position wie der Punkt auf der Bahn in dem Bild der angezeigten Symbole, und, basierend auf einer Übereinstimmung (86, 88) zwischen dem Pixelwert und einem graphischen Element, das an der entsprechenden räumlichen Position angezeigt wird, Hinzufügen (90) einer Kennung des Grafikelements zu einer Liste von Kennungen von durchlaufenen Grafikelementen.

10. Verfahren zur Bestätigung eines Authentifizierungscodes nach einem der Ansprüche 1 bis 9, wobei jedes der grafischen Elemente einen Verlauf des Symbols, das es darstellt, enthält.

11. Verfahren zur Bestätigung eines Authentifizierungscodes nach einem der Ansprüche 1 bis 9, wobei jedes der grafischen Elemente einen Verlauf eines Objekts enthält, das das Symbol, das es darstellt, codiert.

12. Verfahren zur Bestätigung eines Authentifizierungscodes nach einem der Ansprüche 1 bis 11, wobei der Schritt des Erhaltens einer Folge von Raumkoordinaten, die für die aufeinanderfolgenden Positionen des Anwendungspunktes repräsentativ sind, außerdem einen Empfang (44) eines Signals zum Ende der Eingabe umfasst.

13. Computerprogramm mit Anweisungen zur Durchführung der Schritte eines Verfahrens zur Bestätigung eines Authentifizierungscodes nach den Ansprüchen 1 bis 12 bei der Ausführung des Programms durch einen Prozessor einer programmierbaren Vorrichtung.

14. Vorrichtung zur Bestätigung eines Authentifizierungscodes, der einem autorisierten Benutzer den Zugriff auf einen Dienst oder ein Informatiksystem ermöglicht, wobei der Authentifizierungscode eine Folge von Symbolen ist, die über die Mensch-Maschine-Schnittstelle eines Benutzerendgeräts eingegeben werden. Die Vorrichtung umfasst eine zentrale Recheneinheit mit einem oder mehreren Prozessoren, **dadurch gekennzeichnet, dass** sie Module umfasst, die von der zentralen Recheneinheit implementiert werden und zu Folgendem geeignet sind:
- Überlagern eines Hintergrundbildes mit grafischen Elementen an zufällig bestimmten Positionen, wobei jedes grafische Element ein auswählbares Symbol repräsentiert, um das digitale Bild zur Eingabe des Authentifizierungscodes zu bilden;
- für jedes grafische Element Speichern von mindestens einer Information bezüglich des dargestellten Symbols und der Position des grafischen Elements in dem digitalen Bild zur Eingabe eines Authentifizierungscodes;
- Bereitstellen des digitalen Bildes zur Eingabe eines Authentifizierungscodes an ein Benutzerendgerät;
- Erhalten einer Folge von Raumkoordinaten, die repräsentativ für die aufeinanderfolgenden Positionen eines Anwendungspunktes sind, der auf dem digitalen Bild zur Eingabe eines Authentifizierungscodes durch einen Zeiger bewegt wird. So wird eine durchgehende Bahn gebildet, die die angezeigten graphischen Elemente durchläuft. Die Folge von Raumkoordinaten bildet eine Liste von Raumkoordinaten, die für Punkte auf der Bahn repräsentativ sind;
- Bestimmen einer Sequenz von Symbolen, die einen Authentifizierungscode bilden, aus der genannten Folge von Raumkoordinaten.

15. System zur Bestätigung eines Authentifizierungscodes, das einem autorisierten Benutzer den Zugriff auf einen Dienst oder ein Informatiksystem ermöglicht und ein Benutzerendgerät umfasst, das zur Kommunikation mit einem Server über ein Kommunikationsnetzwerk geeignet ist,
wobei der Authentifizierungscode eine Sequenz von Symbolen ist, die über eine Mensch-Maschine-Schnittstelle des Benutzerendgeräts eingegeben werden,
wobei das Endgerät einen Anzeigebildschirm umfasst und so beschaffen ist, dass es auf dem Anzeigebildschirm ein digitales Bild zur Eingabe eines Authentifizierungscodes anzeigt, das über ein Hintergrundbild eine Vielzahl von Symbolen überlagert,
wobei der Server dazu ausgelegt ist, einen Authentifizierungscode zu erhalten, der von einem Benutzer durch Auswahl von Symbolen aus den angezeigten Symbolen eingegeben wird, und den eingegebenen Authentifizierungscode mit einem zuvor gespeicherten Authentifizierungscode zu vergleichen,
wobei das System **dadurch gekennzeichnet ist, dass** der Server Module umfasst, die vor dem Anzeigeschritt zu Folgendem geeignet sind:
- Überlagern des Hintergrundbildes mit grafischen Elementen an zufällig bestimmten Positionen, wobei jedes grafische Element ein auswählbares Symbol repräsentiert, um das digitale Bild zur Eingabe des Authentifizierungscodes zu bilden;
- für jedes grafische Element Speichern von mindestens einer Information bezüglich des dargestellten Symbols und der Position des grafischen Elements in dem digitalen Bild zur Eingabe eines Authentifizierungscodes;
und wobei das System Module umfasst, die nach der Anzeige zu Folgendem geeignet sind:
- Erhalten einer Folge von Raumkoordinaten, die repräsentativ für die aufeinanderfolgenden Positionen eines Anwendungspunktes sind, der auf dem digitalen Bild zur Eingabe eines Authentifizierungscodes durch einen Zeiger bewegt wird.So wird eine durchgehende Bahn gebildet, die die angezeigten graphischen Elemente durchläuft. Die Folge von Raumkoordinaten bildet eine Liste von Raumkoordinaten, die für Punkte auf der Bahn repräsentativ sind;
- durch den Server eine Sequenz von durchlaufenen Symbolen aus der genannten Folge von Raumkoordinaten zu bestimmen.

## Claims

1. A method for validating an authentication code enabling an authorised user to access a service or a computer system, the authentication code being a sequence of symbols entered by means of a human-machine interface of a user terminal, comprising the steps of displaying, on a display screen of the user terminal, a digital image of the authentication code entry comprising a plurality of symbols superimposed on a background image, obtaining an authentication code entry by a user by selecting symbols from among the symbols displayed, and of comparing the authentication code entered with a previously saved authentication code,
the method being **characterised in that** it comprises:
prior to the step of displaying (38), steps, implemented by a server adapted to communicate with the user terminal, of:
- superimposing (34) graphic elements on the background image at randomly determined positions, each graphic element being representative of a selectable symbol, to form the authentication code entry digital image;
- storing (34), for each graphic element, at least one item of information relating to the symbol represented and to the position of the graphic element in the authentication code entry digital image;
and after the step (38) of displaying, steps of:
- obtaining (40, 42, 44, 48) a succession of spatial coordinates representative of the successive positions of a point of application moved over the authentication code entry digital image by means of a pointing device, thus forming a continuous trajectory, said trajectory reaching displayed graphic elements, said succession of spatial coordinates forming a list of spatial coordinates representative of points of the trajectory;
- determining (50), by the server, on the basis of said succession of spatial coordinates, a sequence of symbols forming an authentication code.

2. The method for validating an authentication code according to claim 1, in which forming (34) an authentication code entry digital image comprises obtaining from a set of predetermined background images, or generating on the fly, a background image which is textured and/or comprises high-contrast details

3. The method for validating an authentication code according to any one of claims 1 or 2, in which two adjacent graphic elements are separated by a distance greater than or equal to a predetermined minimum distance.

4. The method for validating an authentication code according to one of claims 1 to 3, in which each graphic element has texture and/or colour and/or transparency properties chosen as a function of the background image, so as to reduce a local contrast with respect to said background image.

5. The method for validating an authentication code according to any one of claims 1 to 4, comprising a step of interpolation from the succession of spatial coordinates representative of the successive positions of the point of application, followed by a step of re-sampling that makes it possible to obtain a list of increased numbers of spatial coordinates representative of points of the trajectory.

6. The method for validating an authentication code according to any one of the preceding claims, in which the item of information relating to the symbol represented by a graphic element and to the position of said graphic element in the authentication code entry digital image consists of a triplet comprising an identifier the said symbol and two coordinates of a central point associated with the graphic element, said central point being the centre of a geometric shape in which the graphic display element is at least partially inscribed.

7. The method for validating an authentication code according to claim 6, in which the determining (50) of a sequence of symbols forming the authentication code comprises, for each point on the trajectory:
computing (66, 68) the distance between said point on the trajectory and at least one central point associated with a graphic element,
comparing (68) the computed distance to a predetermined input distance and/or
comparing (66) the computed distance to a predetermined output distance, and
as a function of the result of said comparisons (66, 68), adding an identifier of the graphical element to a list of identifiers of graphical elements which were reached.

8. The method for validating an authentication code according to claim 7, wherein said input distance is less than said output distance.

9. The method for validating an authentication code according to any one of claims 1 to 5, comprising storing an image of displayed symbols comprising pixels, each pixel having a spatial position and a value, the value being representative of a graphical element displayed at the corresponding spatial position or of the absence of a graphical element displayed at the corresponding spatial position, and comprising storing, for each graphical element, an identifier of the symbol which it represents, determining (50) a sequence of symbols forming the authentication code comprising:
- for each point of the trajectory, determining (84) the value of the pixel of the same spatial position as the point of the trajectory in the image of displayed symbols, and, as a function of a match (86, 88) between said pixel value and a graphic element displayed at the corresponding spatial position, adding (90) an identifier of said graphic element in a list of identifiers of graphic elements reached.

10. The method for validating an authentication code according to any one of claims 1 to 9, in which each of the said graphic elements comprises a plot of the symbol which it represents.

11. The method for validating an authentication code according to any one of claims 1 to 9, in which each of the said graphic elements comprises a plot of an object encoding the symbol which it represents.

12. The method for validating an authentication code according to any one of claims 1 to 11, in which the step of obtaining a succession of spatial coordinates representative of the successive positions of the point of application additionally comprises a reception (44) of an end-of-entry signal.

13. A computer program comprising instructions for implementing the steps of a method for validating an authentication code according to claims 1 to 12 when the program is executed by a processor of a programmable device.

14. A device for validating an authentication code enabling an authorised user to access a service or a computer system, the authentication code being a sequence of symbols entered via a human-machine interface of a user terminal, the device comprising a central computing unit comprising one or more processors, **characterised in that** it comprises modules implemented by said central computing unit and adapted for:
- superimposing graphic elements on the background image at randomly determined positions, each graphic element being representative of a selectable symbol, to form the authentication code entry digital image;
- storing, for each graphic element, at least one item of information relating to the symbol represented and to the position of the graphic element in the authentication code entry digital image;
- providing the authentication code entry digital image to a user terminal;
- obtaining a succession of spatial coordinates representative of the successive positions of a point of application moved over the authentication code entry digital image by means of a pointing device, thus forming a continuous trajectory, said trajectory reaching displayed graphic elements, said succession of spatial coordinates forming a list of spatial coordinates representative of points of the trajectory;
- determining a sequence of symbols forming an authentication code from said succession of spatial coordinates.

15. A system for validating an authentication code enabling an authorised user to access a computer service or system, comprising a user terminal adapted to communicate with a server via a communications network,
the authentication code being a sequence of symbols entered via a human-machine interface on the user terminal,
the terminal comprising a display screen and being adapted to display on the display screen an authentication code entry digital image comprising a plurality of symbols superimposed on a background image,
the server being adapted to obtain an authentication code entered by a user by selecting symbols from the symbols displayed, and to compare the authentication code entered with a previously saved authentication code,
the system being **characterised in that** the server comprises modules adapted to, prior to the step of displaying:
- superimposing graphic elements on the background image at randomly determined positions, each graphic element being representative of a selectable symbol, to form the authentication code entry digital image;
- storing, for each graphic element, at least one item of information relating to the symbol represented and to the position of the graphic element in the authentication code entry digital image;
and after displaying, the system comprising modules adapted for:
- obtaining a succession of spatial coordinates representative of the successive positions of a point of application moved over the authentication code entry digital image by means of a pointing device, thus forming a continuous trajectory, said trajectory reaching displayed graphic elements, said succession of spatial coordinates forming a list of spatial coordinates representative of points of the trajectory;
- determining, by the server, a sequence of symbols reached, based on the said succession of spatial coordinates.
